# FASCICULE DE BREVET EUROPEEN

(11) **EP 0 663 674 B1**
(45) Date de publication et mention de la délivrance du brevet: **01.12.1999**
(21) Numéro de dépôt: 95400036.0
(22) Date de dépôt: 09.01.1995
(51) Int. Cl.: H01H 9/18, H02B 1/26

(54) **Appareil, notamment appareil électrique, à capot protège-repère monté coulissant**
Gerät, insbesondere elektrisches Gerät, mit gleitbarem Schutzvorrichtungsabdeckung
Apparatus, especially electric apparatus, with a slidable mounted protection-marking cover

(30) Priorité: 10.01.1994 FR 9400154
(43) Date de publication de la demande: 19.07.1995
(73) Titulaire: LEGRAND, F-87045 Limoges Cédex (FR); LEGRAND SNC, F-87045 Limoges (FR)
(72) Inventeur: Combas, Christian, F-87240 Ambazac (FR); Petit, Laurent, F-87220 Boisseuil (FR)
(74) Mandataire: CABINET BONNET-THIRION

(56) Documents cités:
- EP-A- 0 418 152
- DE-A- 3 015 288
- DE-U- 7 712 090
- GB-A- 783 906
- GB-A- 2 229 029
- US-A- 5 212 899

## Description

La présente invention concerne d'une manière générale les appareils dont le boîtier porte, localement, pour leur identification, un capot protège-repère, qui, délimitant pour sa part un logement propre à la mise en place d'un repère, en pratique une simple étiquette, est monté coulissant entre une position rétractée, pour laquelle ce repère est dûment confiné dans ce logement, et une position déployée, pour laquelle il est au contraire dûment accessible.

Elle vise plus particulièrement le cas des appareils modulaires, c'est-à-dire des appareils destinés à être disposés jointivement côte à côte sur un même support.

C'est le cas, notamment, de certains appareils électriques, tels que par exemple des disjoncteurs ou des coupe-circuit, à aligner le long d'un rail au sein d'une quelconque enveloppe de protection, telle que, par exemple, une armoire ou un coffret.

Un appareil modulaire à capot protège-repère monté coulissant se trouve notamment décrit dans le brevet français qui, déposé le 13 septembre 1989 sous le No 89 11964, a été publié sous le No 2 651 918.

En pratique, dans ce brevet français, le capot protège-repère s'étend de l'une à l'autre des faces principales du boîtier, sur la partie de la tranche de celui-ci formant sa face avant, et il est directement monté coulissant sur ce boîtier.

Cette disposition a donné et peut encore donner satisfaction.

Elle présente cependant des inconvénients, qui sont les suivants.

Tout d'abord, les conditions suivant lesquelles le capot protège-repère est mis en place sur le boîtier, aussi bien que celles suivant lesquelles il coulisse ensuite sur celui-ci, sont inévitablement tributaires des tolérances de fabrication de ce boîtier.

Il y a donc un risque de blocage, la maîtrise des jeux nécessaires s'avérant difficile.

S'il est recherché, de surcroît, qu'un même capot protège-repère puisse être mis en commun entre deux ou plusieurs appareils modulaires disposés côte à côte, les difficultés se trouvent accrues, en raison de l'inévitable empilage des tolérances de fabrication d'un de ces appareils modulaires à l'autre.

En outre, le logement que délimite le capot protège-repère pour la mise en place d'un repère étant lui-même directement formé entre ce capot protège-repère et le ou les boîtiers sous-jacents, le repère peut s'avérer difficile à extraire de ce logement.

La présente invention a d'une manière générale pour objet une disposition permettant de surmonter ces difficultés et conduisant en outre à d'autres avantages.

De manière plus précise, elle a pour objet un appareil, notamment un appareil électrique, du genre dont le boîtier porte localement un capot protège-repère, qui, délimitant pour sa part un logement propre à la mise en place d'un repère, est monté coulissant entre une position rétractée, pour laquelle ce repère est dûment confiné dans ce logement, et une position déployée, pour laquelle il est au contraire dûment accessible, le capot protège-repère est monté coulissant sur une embase qui, distincte du boîtier, est rapportée sur celui-ci, et qui, ainsi, et abstraction faite d'éventuels jeux de montage, est solidaire de ce boîtier, disposé côte à côte avec au moins un appareil de même type, il a en commun avec celui-ci une même embase et un même capot protège-repère.

Les conditions suivant lesquelles cette embase est rapportée sur le boîtier, par exemple par encliquetage, se satisfont sans difficulté d'éventuelles tolérances de fabrication du boîtier, cependant que, échappant à de telles tolérances de fabrication, les conditions suivant lesquelles le capot protège-repère peut être mis en place sur cette embase, aussi bien que celles suivant lesquelles il coulisse ensuite sur celle-ci, ne dépendent plus que des seules tolérances de fabrication entre cette embase et le capot protège-repère, et peuvent être donc rigoureusement contrôlées, quel que soit le nombre d'appareils éventuellement concernés.

Autrement dit, une bonne maîtrise des jeux est avantageusement obtenue par l'embase mise en oeuvre suivant l'invention, et le capot protège-repère bénéficie conjointement par construction sur celle-ci de bonnes conditions de coulissement.

En outre, le logement que délimite pour sa part le capot protège-repère étant formé entre ce capot protège-repère et l'embase mise en oeuvre suivant l'invention, le repère bénéficie, avantageusement, sur cette embase, d'une surface suffisamment plane pour que, lorsqu'elle s'avère nécessaire, son extraction soit particulièrement facile.

Par ailleurs, l'embase prévue suivant l'invention peut avantageusement être mise à profit pour porter elle aussi au moins une quelconque mention, telle que par exemple une mention de repérage ou un schéma, qui, intervenant en sus du repère, est masquée lorsque le protège-repère est en position rétractée.

D'autres fonctions que le seul repérage sont ainsi avantageusement accessibles.

Enfin, le capot protège-repère reste par lui-même avantageusement directement utilisable sur un quelconque appareil, modulaire ou monobloc, même en l'absence de toute embase sur celui-ci.

Il suffit en effet que le boîtier de cet appareil soit adapté à le recevoir.

C'est le cas, notamment, de celui faisant l'objet du brevet français No 89 11964 mentionné ci-dessus.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un groupe d'appareils modulaires ayant en commun un capot protège-repère suivant l'invention, pour la position rétractée de ce capot protège-repère ;
la figure 2 est, à échelle supérieure, une vue partielle en perspective du boîtier de ces appareils modulaires ;
la figure 3 est, à échelle encore supérieure, et avec des arrachements locaux, une vue en perspective du capot protège-repère suivant l'invention et de l'embase sur laquelle il est monté coulissant ;
les figures 4, 5 et 6 sont, à échelle encore supérieure, des vues transversales en coupe de cette embase, suivant, chacune respectivement, les lignes IV-IV, V-V et VI-VI de la figure 3 ;
les figures 7 et 8 sont, à l'échelle des figures 4, 5 et 6, des vues transversales en coupe du capot protège-repère, suivant les lignes VII-VII et VIII-VIII de la figure 3 ;
la figure 9 est une vue partielle en perspective reprenant pour partie celle de la figure 1, pour la position déployée du capot protège-repère ;
la figure 10 est une vue partielle en perspective qui, analogue à celle de la figure 9, illustre l'application du capot protège-repère suivant l'invention à un appareil monobloc.

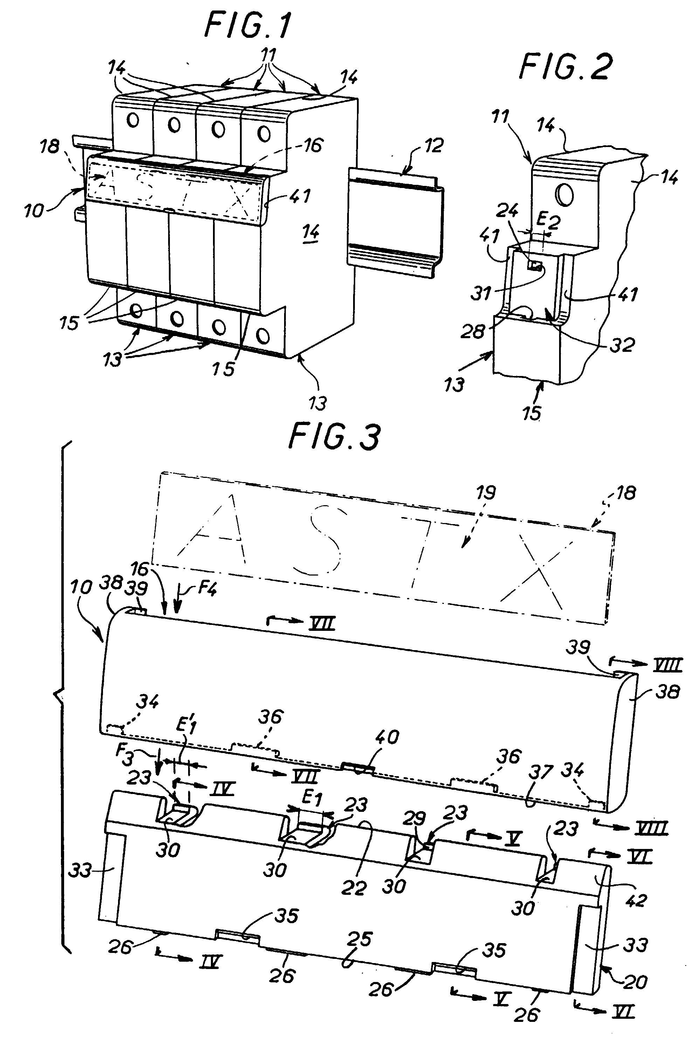

Tel qu'illustré sur ces figures, il s'agit, notamment, d'équiper d'un capot protège-repère 10 un ou plusieurs appareils modulaires 11 susceptibles, comme représenté à la figure 1, d'être disposés jointivement côte à côte sur un même support 12, en l'espèce un rail de type normalisé.

Ces appareils modulaires 11, qui peuvent notamment être des appareils électriques, et par exemple des disjoncteurs ou des coupe-circuit, ne relèvent pas par eux-mêmes de la présente invention.

Ils ne seront donc pas décrits en détail ici, et, sur les figures, seul a été schématisé par son contour leur boîtier 13, à l'exclusion, par exemple, des organes, tels que manettes ou autres, normalement laissés accessibles à l'usager en façade d'un tel boîtier 13.

Seuls seront décrits ici les éléments de tels appareils modulaires 11, et, plus précisément, de leur boîtier 13, nécessaires à la compréhension de l'invention.

En pratique, le boîtier 13 se présente sous la forme générale d'une plaquette, qui est de contour globalement rectangulaire, et dont les faces principales 14 sont planes.

Il est adapté à être adossé par sa tranche au support 12, et, du côté opposé à celui-ci, il présente en saillie sur cette tranche une partie de façade 15 destinée à faire saillie hors d'un plastron, à la faveur d'une fenêtre de celui-ci, lorsqu'un tel plastron, non représenté sur les figures, recouvre globalement l'ensemble parallèlement au support 12.

C'est sur cette partie de façade 15 que sont normalement implantés les organes à la disposition de l'usager.

C'est également sur elle qu'intervient le capot protège-repère 10.

Dans la forme de réalisation représentée, deux appareils modulaires 11 au moins, et en pratique quatre, sont disposés côte à côte sur le support 12, en se jointoyant l'un l'autre par les faces principales 14 de leur boîtier 13, et ils ont en commun un même capot protège-repère 10.

De manière connue en soi, ce capot protège-repère 10, qui, suivant des dispositions décrites plus en détail ultérieurement, délimite pour sa part un logement 16 propre à la mise en place d'un quelconque repère 18, est monté coulissant entre une position rétractée, représentée sur la figure 1, pour laquelle ce repère 18 est dûment confiné dans ce logement 16, et une position déployée, représentée sur la figure 9, pour laquelle ce repère 18 est au contraire dûment accessible.

Dans la forme de réalisation représentée, le repère 18 est une simple étiquette, qui est en carton par exemple, ou en un quelconque autre matériau en feuille tel que par exemple celui vendu sous la dénomination commerciale "RHODOID", et qui porte par exemple une quelconque mention de repérage 19.

Suivant l'invention, le capot protège-repère 10 est monté coulissant sur une embase 20, qui, distincte du boîtier 13 des appareils modulaires 11, est rapportée sur celui-ci, et qui, ainsi, et abstraction faite d'éventuels jeux de montage, est solidaire de ce boîtier 13.

Dans la forme de réalisation représentée, cette embase 20 se présente sous la forme générale d'une simple plaquette, de contour globalement rectangulaire, et, comme le capot protège-repère 10, à l'image duquel elle s'étend, les divers appareils modulaires 11 l'ont en commun.

En outre, dans cette forme de réalisation, entre l'embase 20 et le boîtier 13 des appareils modulaires 11 interviennent des moyens d'encliquetage qui comportent, d'une part, en saillie au dos de l'embase 20, au voisinage d'un des bords longitudinaux de celle-ci, et, en pratique, de son bord longitudinal 22 supérieur, au moins une patte d'encliquetage 23, pour crochetage sur un cran 24 prévu en correspondance sur un tel boîtier 13, et, d'autre part, en saillie le long du bord longitudinal de l'embase 20 opposé au précédent, et, donc, de son bord longitudinal 25 inférieur, au moins une languette 26, pour insertion dans un évidement 28 également prévu en correspondance sur un tel boîtier 13.

En pratique, l'embase 20 présente, alignées, de place en place, le long de son bord longitudinal 22 supérieur, suivant le pas des appareils modulaires 11, un nombre de pattes d'encliquetage 23 égal à celui de ces appareils modulaires 11, et, donc, égal à quatre dans la forme de réalisation représentée.

En pratique, également, elle présente, en saillie le long de son bord longitudinal 25 inférieur, un nombre égal de languettes 26, dont chacune est en correspondance avec une patte d'encliquetage 23.

Ces languettes 26 ont une épaisseur inférieure à celle de la partie courante de l'embase 20, et, leur surface arrière étant en continuité avec celle de celle-ci, elles sont en léger décrochement par rapport à sa surface avant.

Le cran 29 que forment les pattes d'encliquetage 23 fait saillie en direction du bord longitudinal 22 supérieur de l'embase 20, et, pour son moulage, ce dernier présente localement en correspondance une échancrure 30.

Dans la forme de réalisation représentée, le cran 24 que comporte un boîtier 13 pour coopération avec une patte d'encliquetage 23 de l'embase 20 est formé par l'un des bords d'un évidement 31 prévu localement sur la partie de façade 15 de ce boîtier 13, sur une portion 32 de celle-ci en retrait par rapport à sa partie courante, pour l'engagement d'une patte d'encliquetage 23 de l'embase 20.

Conjointement, l'évidement 28 prévu sur un boîtier 13 pour l'engagement d'une languette 26 de l'embase 20 intervient à la base de la portion 32 en retrait de la partie de façade 15 du boîtier 13, au raccordement de celle-ci avec sa partie courante, et il a globalement une forme de poche.

En pratique, seules les pattes d'encliquetage 23 qui interviennent dans la partie médiane de l'embase 20 ont une largeur E1 sensiblement égale à celle E2 de l'évidement 31 des boîtiers 13 tout en étant légèrement inférieure à cette largeur E2, les pattes d'encliquetage 23 intervenant, elles, au voisinage des extrémités de l'embase 20 ayant une largeur E'1 nettement inférieure à la largeur E2.

Une disposition du même type intervient entre les languettes 26 de l'embase 20 et l'évidement 28 des boîtiers 13.

Autrement dit, lorsque, comme en l'espèce, l'embase 20 présente de place en place plusieurs pattes d'encliquetage 23 et plusieurs languettes 26, les pattes d'encliquetage 23 et les languettes 26 extrêmes ont une largeur E'1 inférieure à celle E1 des pattes d'encliquetage 23 et des languettes 26 médianes.

Ainsi, tout en s'emboîtant exactement, ou sensiblement exactement, sur le boîtier 13 des appareils modulaires 11 médians, l'embase 20 bénéficie avantageusement d'un certain jeu vis-à-vis du boîtier 13 des appareils modulaires 11 extrêmes, ce qui lui permet avantageusement de se satisfaire de l'inévitable empilage de tolérances de fabrication entre les divers appareils modulaires 11.

En bordure de ses extrémités, l'embase 20 présente, localement, sur une partie seulement de sa hauteur à compter de son bord longitudinal 25 inférieur, des décrochements 33, qui affectent sa face avant, et à la faveur desquels interviennent des bossages 34 que porte en saillie à son dos le capot protège-repère 10, pour le guidage de ce capot protège-repère 10 et son arrêt en position déployée.

Débouchant librement sur le bord longitudinal 25 inférieur de l'embase 20, ces décrochements 33 sont au contraire borgnes à distance du bord longitudinal 22 supérieur de celle-ci.

Sur sa face avant, l'embase 20 présente, également, au moins un dégagement 35, et, en correspondance, le capot protège-repère 10 porte en saillie à son dos au moins un bossage 36, pour son verrouillage débrayable sur l'embase 20 en position rétractée, par simple engagement de ce bossage 36 dans le dégagement 35 de celle-ci.

Dans la forme de réalisation représentée, deux dégagements 35 sont prévus sur la face avant de l'embase 20, à distance l'un de l'autre, le long de son bord longitudinal 25 inférieur, à l'écart des languettes 26, et, en correspondance, le capot protège-repère 10 présente lui-même deux bossages 36.

En pratique, ces bossages 36 s'étendent à niveau avec les bossages 34, le long du bord longitudinal 37 inférieur du capot protège-repère 10.

Mais au lieu d'avoir un profil en équerre, comme les bossages 34, ils ont un profil arrondi.

Indépendamment des bossages 34 et 36, le capot protège-repère 10 a par lui-même une configuration générale classique, du type de celle du capot protège-repère décrit dans le brevet français No 89 11964.

Il comporte donc, à ses extrémités, en saillie sur sa face arrière, et sensiblement perpendiculairement à celle-ci, deux rebords 38, qui s'étendent sur toute sa hauteur, et par lesquels il est apte à contourner les extrémités de l'embase 20, avec, dirigés l'un vers l'autre, le long du bord libre de ces rebords 38, des retours en équerre 39, par lesquels il est en prise avec l'embase 20 tout en pouvant coulisser sur celle-ci.

En pratique, les bossages 34 s'étendent au ras des rebords 38.

Sur sa face avant, le capot protège-repère 10 présente, en outre, le long de son bord longitudinal 37 inférieur, dans la zone médiane de celui-ci, un dégagement 40, pour faciliter l'exercice d'une traction sur lui lorsqu'il est en position rétractée.

En bordure de ses faces principales 14, le boîtier 13 des appareils modulaires 11 présente, , corollairement, localement, des décrochements 41, qui s'étendent sur toute la hauteur de la portion 32 en retrait de sa partie de façade 15, et à la faveur desquels le capot protège-repère 10 est effectivement libre de coulisser sur l'embase 20.

En pratique, seul le décrochement 41 de rive du boîtier 13 des appareils modulaires 11 extrêmes intervient dans ce coulissement.

En effet, l'embase 20 s'étend en porte à faux sur les décrochements 41 de rive à ses extrémités, et c'est à la faveur de l'espace libre libéré par ceux-ci à l'aplomb de ces extrémités que s'étendent les retours en équerre 39 du capot protège-repère 10.

Corollairement, l'embase 20 franchit sans discontinuité en pont les décrochements 41 intermédiaires entre ses extrémités.

Préférentiellement, et pour des raisons qui apparaîtront ci-après, l'embase 20 présente un léger biseau ou chanfrein 42 tout au long de son bord longitudinal 22 supérieur.

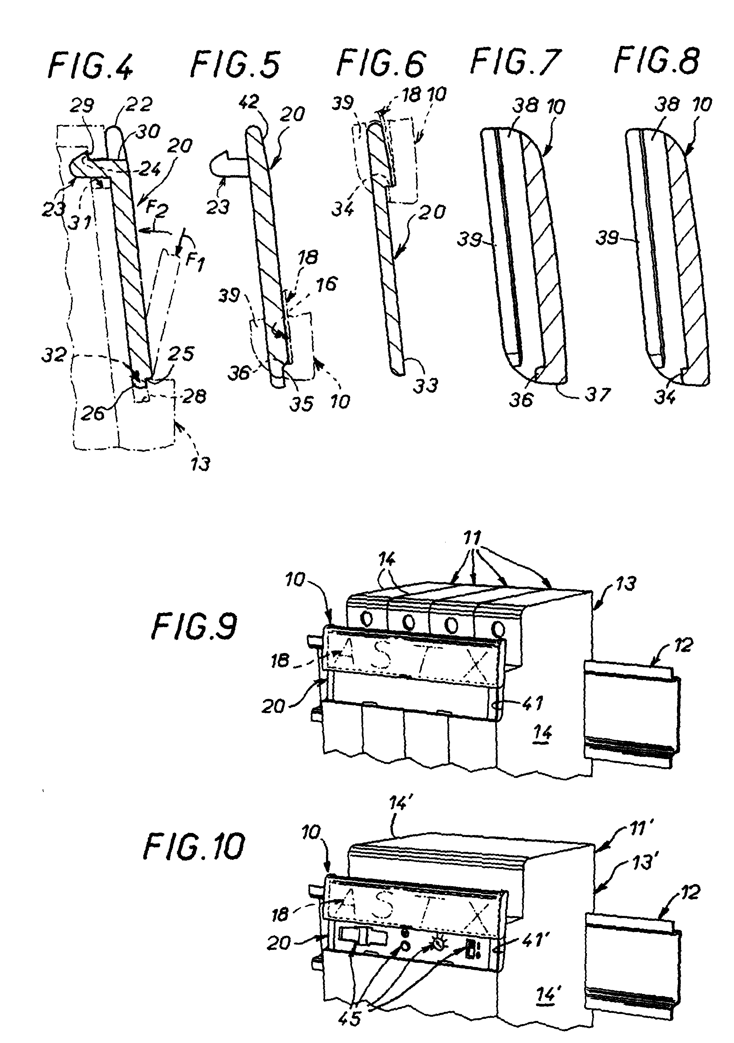

Au montage, l'embase 20 est encliquetée sur le boîtier 13 des appareils modulaires 11, tel que schématisé en traits interrompus pour l'un d'eux sur la figure 4.

Par exemple, et tel que schématisé également en traits interrompus sur cette figure 4, l'embase 20 est d'abord présentée de biais, pour engagement de ses languettes 26 dans les évidements 28 des boîtiers 13 alignés, suivant la flèche F1 de la figure 4, puis elle est rabattue contre la portion 32 en retrait de ces boîtiers 13, suivant la flèche F2 de la figure 4, jusqu'à engagement de ses pattes d'encliquetage 23 dans leurs évidements 31 et venue en prise de ces pattes d'encliquetage 23 avec les crans 24 formés par ceux-ci.

Le capot protège-repère 10 est ensuite engagé par le haut sur l'embase 20, suivant la flèche F3 de la figure 3, ce qui en suppose une légère déformation élastique pour que ses bossages 34 atteignent les décrochements 33 de l'embase 20.

En pratique, cet engagement est facilité par le biseau ou chanfrein 42 de l'embase 20.

Le repère 18 est à son tour engagé par le haut dans le logement 16, suivant la flèche F4 de la figure 3.

Comme précédemment, cet engagement est facilité par le biseau ou chanfrein 42 de l'embase 20.

Suivant l'invention, le logement 16 du repère 18 est formé entre l'embase 20 et le capot protège-repère 10.

En pratique, le repère 18 porte par son bord inférieur contre les bossages 34 et 36 du capot protège-repère 10, tel que schématisé en traits interrompus sur les figures 5 et 6.

Il en résulte que, lorsque le capot protège-repère 10 est entraîné de sa position rétractée schématisée en traits interrompus sur la figure 5 à sa position déployée schématisée en traits interrompus sur la figure 6, il entraîne avec lui le repère 18.

Ce repère 18 est ainsi directement accessible au doigt, au dos du capot protège-repère 10.

Sa préhension se trouve facilitée par le biseau ou chanfrein 42 de l'embase 20.

Grâce à ce biseau ou chanfrein 42, il peut en effet se mettre en oblique, et, donc, se détacher du capot protège-repère 10.

La figure 10 illustre la mise en oeuvre du capot protège-repère 10 suivant l'invention sur le boîtier 13' d'un appareil monobloc 11'.

Comme précédemment, l'embase 20 est d'abord rapportée sur ce boîtier 13', et celui-ci est donc dûment adapté en conséquence, en présentant, comme précédemment, des évidements, non visibles sur la figure, pour l'engagement des pattes d'encliquetage 23 et des languettes 26 de cette embase 20, et, le long de ses faces principales 14', des décrochements 41' de rive, pour un libre débattement du capot protège-repère 10.

Dans la forme de réalisation représentée, l'embase 20 porte elle-même au moins une quelconque mention 45, qui se trouve masquée quand le capot protège-repère 10 est en position rétractée, et qui ne se trouve donc visible que lorsque ce capot protège-repère 10 est en position déployée, comme représenté sur la figure 10.

Par exemple, ces mentions 45 peuvent être des mentions de repérage, comme précédemment, ou donner une quelconque représentation schématique de la charge desservie par l'appareil monobloc 11' concerné, voire même former un schéma du montage correspondant, la place disponible étant avantageusement suffisante pour l'implantation d'un tel schéma.

Dans la forme de réalisation représentée, le boîtier 13' de l'appareil monobloc 11' correspond en largeur aux boîtiers 13 des quatre appareils modulaires 11 précédents.

Mais il n'en est pas nécessairement ainsi.

Au contraire, leur longueur étant simplement réduite en conséquence, le capot protège-repère 10 suivant l'invention et son embase 20 peuvent tout aussi bien équiper isolément le boîtier 13 d'un appareil modulaire 11.

La présente invention ne se limite d'ailleurs pas à la forme de réalisation décrite et représentée, mais englobe toute variante d'exécution dans les limites des revendications.

## Revendications

1. Appareil, notamment appareil électrique, du genre dont le boîtier (13) porte localement un capot protège-repère (10), qui, délimitant pour sa part un logement (16) propre à la mise en place d'un repère (18), est monté coulissant entre une position rétractée, pour laquelle ce repère (18) est dûment confiné dans ce logement (16), et une position déployée, pour laquelle il est au contraire dûment accessible, caractérisé en ce que, ledit capot protège-repère (10) est monté coulissant sur une embase (20) qui, distincte du boîtier (13), est rapportée sur celui-ci, et qui, ainsi, et abstraction faite d'éventuels jeux de montage, est solidaire de ce boîtier (13), et en ce que, disposé côte à côte avec au moins un appareil de même type, il a en commun avec celui-ci une même embase (20) et un même capot protège-repère (10).

2. Appareil suivant la revendication 1, caractérisé en ce que, entre l'embase (20) et le boîtier (13), interviennent des moyens d'encliquetage.

3. Appareil suivant la revendication 2, caractérisé en ce que les moyens d'encliquetage comportent, d'une part, en saillie au dos de l'embase (20), au moins une patte d'encliquetage (23), pour crochetage sur un cran (24) prévu en correspondance sur le boîtier (13), et, d'autre part, en saillie le long d'un des bords de l'embase (20), au moins une languette (26), pour insertion dans un évidement (28) également prévu en correspondance sur le boîtier (13).

4. Appareil suivant la revendication 3, caractérisé en ce que la languette (26) fait saillie le long d'un bord de l'embase (20) opposé à un bord de celle-ci au voisinage duquel fait saillie la patte d'encliquetage (23).

5. Appareil suivant l'une quelconque des revendications 1 à 4, caractérisé en ce que le boîtier (13) présente, localement, en bordure de ses faces principales (14), des décrochements (41) à la faveur desquels le capot protège-repère (10) est libre de coulisser sur l'embase (20).

6. Appareil suivant l'une quelconque des revendications 1 à 5, caractérisé en ce que l'embase (20) présente, localement, en bordure de ses extrémités, des décrochements (33) à la faveur desquels interviennent des bossages (34) que porte en saillie à son dos le capot protège-repère (10), notamment pour arrêt de ce capot protège-repère (10) en position déployée.

7. Appareil suivant l'une quelconque des revendications 1 à 6, caractérisé en ce que l'embase (20) porte elle aussi au moins une quelconque mention (45) qui se trouve masquée quand le capot protège-repère (10) est en position rétractée.

8. Appareil suivant l'une quelconque des revendications 1 à 7, caractérisé en ce que, le capot protège-repère (10) portant en saillie à son dos au moins un bossage (36), l'embase (20) présente en correspondance un dégagement (35), pour engagement dudit bossage (36) dans ledit dégagement (35) et ainsi verrouillage débrayable du capot protège-repère (10) sur l'embase (20) lorsqu'il est en position rétractée.

9. Appareil suivant l'une quelconque des revendications 1 à 8, caractérisé en ce que l'embase (20) se présente sous la forme générale d'une simple plaquette.

10. Appareil suivant les revendications 1 et 3, prises conjointement, caractérisé en ce que, l'embase (20) présentant de place en place plusieurs pattes d'encliquetage (23) et plusieurs languettes (26), les pattes d'encliquetage (23) et les languettes (26) extrêmes ont une largeur (E'1) inférieure à celle (E1) des pattes d'encliquetage (23) et des languettes (26) médianes.

## Patentansprüche

1. Vorrichtung, insbesondere elektrische Vorrichtung, deren Gehäuse (13) örtlich eine Kennzeichenschutzkappe (10) trägt, die ihrerseits eine Aufnahme (16) abgrenzt, die zum Einsetzen eines Kennzeichens (18) geeignet ist, und verschiebbar montiert ist zwischen einer eingeschobenen Stellung, in der das Kennzeichen (18) in geeigneter Weise in der Aufnahme (16) eingeschlossen ist, und einer ausgefahrenen Stellung, in der es dagegen in geeigneter Weise zugänglich ist, dadurch gekennzeichnet, daß die Kennzeichenschutzkappe (10) auf einem Sockel (20) verschiebbar montiert ist, der vom Gehäuse (13) getrennt und an diesem angebracht ist und der auf diese Weise, abgesehen von ggf. vorhandenen Montagespielen, mit diesem Gehäuse (13) fest verbunden ist, und daß die Vorrichtung, neben mindestens einer Vorrichtung vom selben Typ angeordnet, mit dieser einen Sockel (20) und eine Kennzeichenschutzkappe (10) gemeinsam hat.

2. Vorrichtung nach Anspruch 1, dadurch gekennzeichnet, daß zwischen dem Sockel (20) und dem Gehäuse (13) Einklinkmittel vorgesehen sind.

3. Vorrichtung nach Anspruch 2, dadurch gekennzeichnet, daß die Einklinkmittel einerseits, auf der Rückseite des Sokkels (20) vorstehend, mindestens einen Einklinklappen (23) zum Einhaken in eine in Entsprechung am Gehäuse (13) vorgesehene Aussparung (24) und andererseits, längs eines der Ränder des Sockels (20) vorstehend, mindestens eine Zunge (26) zum Einsetzen in eine ebenfalls in Entsprechung am Gehäuse (13) vorgesehene Ausnehmung (28) umfaßt.

4. Vorrichtung nach Anspruch 3, dadurch gekennzeichnet, daß die Zunge (26) längs eines Randes des Sockels (20) vorsteht, der einem Rand dieses Sockels entgegengesetzt ist, in dessen Nähe der Einklinklappen (23) vorsteht.

5. Vorrichtung nach einem der Ansprüche 1 bis 4, dadurch gekennzeichnet, daß das Gehäuse (13) örtlich am Rand seiner Hauptseiten (14) Absätze (41) aufweist, dank derer die Kennzeichenschutzkappe (10) auf dem Sockel (20) frei gleiten kann.

6. Vorrichtung nach einem der Ansprüche 1 bis 5, dadurch gekennzeichnet, daß der Sockel (20) örtlich am Rand seiner Enden Absätze (33) aufweist, in die Vorsprünge (34) eintreten, die die Kennzeichenschutzkappe (10) auf ihrer Rückseite vorstehend trägt, und zwar insbesondere zur Blockierung dieser Kennzeichenschutzkappe (10) in ausgefahrener Stellung.

7. Vorrichtung nach einem der Ansprüche 1 bis 6, dadurch gekennzeichnet, daß auch der Sockel (20) mindestens eine beliebige Angabe (45) trägt, die abgedeckt ist, wenn die Kennzeichenschutzkappe (10) in eingeschobener Stellung ist.

8. Vorrichtung nach einem der Ansprüche 1 bis 7, dadurch gekennzeichnet, daß, wenn die Kennzeichenschutzkappe (10) auf ihrer Rückseite vorstehend mindestens einen Vorsprung (36) trägt, der Sockel (20) in Entsprechung eine Ausnehmung (35) aufweist, um diesen Vorsprung (36) in diese Ausnehmung (35) einzuführen und auf diese Weise die Kennzeichenschutzkappe (10) auf dem Sockel (20) auskuppelbar zu verriegeln, wenn sie in eingeschobener Stellung ist.

9. Vorrichtung nach einem der Ansprüche 1 bis 8, dadurch gekennzeichnet, daß der Sockel (20) in der allgemeinen Form einer einfachen Platte vorliegt.

10. Vorrichtung nach den Ansprüchen 1 und 3 zusammen, dadurch gekennzeichnet, daß, wenn der Sockel (20) stellenweise mehrere Einklinklappen (23) und mehrere Zungen (26) trägt, die äußeren Einklinklappen (23) und Zungen (26) eine Breite (E'1) besitzen, die kleiner als die Breite (E1) der mittleren Einklinklappen (23) und Zungen (26) ist.

## Claims

1. An apparatus, in particular an electrical apparatus, of the kind whose casing (13) locally carries an identifying marker-protecting cover (10) which, for its part delimiting a housing (16) for setting an identifying marker (18) in place therein, is mounted slidably between a retracted position in which said marker (18) is appropriately confined in said housing (16) and a deployed position in which it is in contrast appropriately accessible, characterised in that said protection cover (10) is mounted slidably on a base (20) which, separate from the casing (13). is fitted thereto and which thus and disregarding possible assembly clearances is fixed with respect to said casing (13). disposed in side-by-side relationship with at least one apparatus of the same type. it has in common therewith the same base (20) and the same protection cover (10).

2. Apparatus according to claim 1 characterised in that latching means are operatively disposed between the base (20) and the casing (13).

3. Apparatus according to claim 2 characterised in that the latching means comprise on the one hand in projecting relationship on the back of the base (20) at least one latching lug (23) for hooking engagement on a catch (24) provided in corresponding relationship on the casing (13) and on the other hand in projecting relationship along one of the edges of the base (20) at least one tongue portion (26) for insertion in an opening (28) also provided in corresponding relationship on the casing (13).

4. Apparatus according to claim 3 characterised in that the tongue portion (26) projects along an edge of the base (20) opposite to an edge thereof, in the vicinity of which the latching lug (23) projects.

5. Apparatus according to any one of claims 1 to 4 characterised in that the casing (13) locally has. bordering its main faces (14). recesses (41) by means of which the protection cap (10) is free to slide on the base (20).

6. Apparatus according to any one of claims 1 to 5 characterised in that the base (20) locally comprises, bordering its ends, recesses (33) by means of which bosses (34) which the protection cover (10) carries in projecting relationship at its back are operative, in particular for arresting said protection cover (10) in the deployed position.

7. Apparatus according to any one of claims 1 to 6 characterised in that the base (20) also carries at least one indication (45) of any kind which is concealed when the protection cover (10) is in the retracted position.

8. Apparatus according to any one of claims 1 to 7 characterised in that, the protection cover (10) carrying at least one boss (30) in projecting relationship at its back, the base (20) has in a corresponding position a recess (35) for engagement of said boss (36) in said recess (35) and thus to provide for disengageable locking of the protection cover (10) on the base (20) when it is in the retracted position.

9. Apparatus according to any one of claims 1 to 8 characterised in that the base (20) is in the general shape of a simple plate portion.

10. Apparatus according to claims 1 and 3 in combination characterised in that, the base (20) having a plurality of latching lugs (23) and a plurality of tongue portions (26) at spaced positions, the end latching lugs (23) and tongue portions (26) are of a width (E'1) which is less than that (El) of the central latching lugs (23) and tongue portions (26).
